# EUROPEAN PATENT SPECIFICATION

(11) **EP 0 725 801 B1**
(45) Date of publication and mention of the grant of the patent: **13.02.2002**
(21) Application number: 95900407.8
(22) Date of filing: 25.10.1994
(51) Int. Cl.: C08F 2/06, C08F 26/06, C08F 2/00

(54) **Hydrogen peroxide catalysed polymerisation to prepare functionalised derivatives of a linear polyvinylpyridine**
H2O2-KATALYSIERTE POLYMERISATION ZUR HERSTELUNG VON FUNKTIONALISIERTEN DERIVATEN AUF BASIS VON POLYVINYLPYRIDINEN
PROCEDE DE PREPARATION DE DERIVES FONCTIONNELS D'UNE POLYVINYLPYRIDINE LINEAIRE OBTENUE AU MOYEN D'UNE POLYMERISATION INITIEE PAR H2O2

(30) Priority: 25.10.1993 US 142708
(43) Date of publication of application: 14.08.1996
(60) Divisional application: 01202266.1
(73) Proprietor: REILLY INDUSTRIES, INC., Indianapolis Indiana 46204 (US)
(72) Inventor: SCRIVEN, Eric, F., V., Greenwood, IN 46142 (US); STOUT, James, R., Brownsburg, IN 46112 (US); KEAY, James, G., Greensboro, NC 27409 (US); MURUGAN, Ramiah, Indianapolis, IN 46236 (US)
(74) Representative: Atkinson, Peter Birch
(86) International application number: PCT/US94/12150
(87) International publication number: WO 95/11926

(56) References cited:
- DE-A- 2 043 613
- US-A- 3 673 168
- US-A- 3 948 960
- US-A- 4 957 984
- US-A- 5 086 133

## Description

### BACKGROUND OF THE INVENTION

The present invention resides generally in the field of polymers of vinylpyridines. More particularly, the present invention relates to polymerizations of vinylpyridine monomers to prepare linear vinyl pyridine polymers from which are prepared functionalized derivatives.

As further background, linear polyvinylpyridines and functionalized derivatives and copolymers thereof are useful in a wide variety of applications. For example, conductive polymers prepared from linear polyvinylpyridine and molecular iodine have been utilized as cathode materials in small solid-state batteries in which long life under low current strain is required, such as batteries used in implantable cardiac pacemakers. See, US-A-3,660,163 (1972) and US-A-3,773,557 (1973). Quaternary salts of polyvinylpyridines (e.g. poly(1-alkylvinylpyridinium halides)) have proven to be good negative electron beam resists for microlithography. See, K. I. Lee et al., Proc. SPIE Int. Soc. Opt. Eng., 333, 15 (1982).

Polyvinylpyridines have been used extensively in the reprographic and lithographic fields because of the combination of properties ranging from adhesive to electrical properties. See, US-A-4,041,204 (1977); US-A-3,942,988 (1976); DE-A-3,040,047 (1981); JP-A-76 30,741 (1976); US-A-4,032,339 (1977); DE-A-2,701,144 (1977); and JP-A-75 124,648 (1975). Polyvinylpyridines have also found applications in the film and photographic area. For example, solutions of polyvinylpyridine or their quaternary salts form thin films that protect the image surface of instant film prints. See, US-A-2,874,045 (1959); US-A-2,830,900 (1958); and US-A-3,459,580 (1969).

Polyvinylpyridines are compatible with synthetic and natural polymers such as polyolefins (including polypropylene), polyethylene terephthalate, nylon, and cellulose, and thus find applications in plastics, alloys and blends. Fibers incorporating polyvinylpyridines show excellent dyeing intensity and are color fast [see, e.g. US-A-3,361,843 (1968)] and polyvinylpyridiniumphosphate imparts permanent fire retardancy to cellulose textiles [see US-A-2,992,942 (1961)] and thus polyvinylpyridines find uses in the textile industry as well.

Polyvinylpyridines further find utility in the treatment of bleached Kraft paper to increase titanium dioxide retention in pulp slurries, and electroplating applications (in particular quaternary salts), as corrosion inhibitors for metals including iron, aluminium, copper, brass, magnesium and solders, as polymerization inhibitors in Li/TiS₂ current-producing electrochemical cells, as emulsion stabilizers and dispersing agents (in particular acid salt and quaternary salt forms), as flocculating agents (particularly acid salt and quaternary ethylhalide forms), in ion exchange membrane preparation and many other applications. These and other uses for linear polyvinylpyridines are reviewed extensively in product literature available from Reilly Industries, Inc., Indianapolis, Indiana U.S.A., entitled "Linear Polyvinylpyridine: Properties and Applications" (1983 and 1989), to which reference can be made for additional information.

As to their preparation, linear polyvinylpyridines have been prepared by various general polymerization techniques. These have included radiation initiated, Ziegler-Natta initiated, free radical initiated and anionic initiated polymerizations. Radiation initiated polymerizations have usually been used for the preparation of graft copolymers. Ziegler-Natta initiated systems usually do not work well for the vinylpyridine systems.

Free radical (addition) polymerizations of vinylpyridines are common in the literature. Generally, there are three differing types of free radical catalyzed polymerizations, those being solution, emulsion and bulk. They are carried out more commonly using initiators such as benzoyl peroxide, cummene hydroperoxide and azobis (isobutyronitrile). Bulk polymerization of vinylpyridine catalyzed by benzoyl peroxide, hydrogen peroxide and certain other per compounds has been reported (FR-A-849,126 (1939); CA:35:63586 (1941)), as has suspension polymerization of vinylpyridine catalyzed by water-soluble free radical initiator in the presence of small particles of solid polyolefin (US-A-3,828,016, US-A-3,947,526 and US-A-4,824,910). Generally speaking, however, in known free radical-catalyzed processes it has often proven highly difficult to control the molecular weight of the vinylpyridine polymers using free radical initiators.

Anionic low temperature (-78°C) homopolymerization of 4-vinylpyridine initiated with certain monofunctional alkali-metal based carbanionic species have been studied in tetrahydrofuran and other solvent mixtures as reported by S.K. Varshney et al. in Macromolecules (26) 701 (1993). A significant disadvantage of this and other anionic polymerizations (see e.g. G.E. Molan et al., J. Polym. Sci. Part A-1, 4, 2336 (1966)) is the requirement of extreme dry conditions for the polymerizations which are directly related to the M_{w} control of the product polymer. Thus, historically, anionic polymerizations of vinylpyridines have been somewhat difficult to control, making it complicated to obtain linear polyvinylpyridines of desired molecular weights, especially at lower molecular weights.

In addition to conventional polymerization methods, vinylpyridines have been reported to spontaneously polymerize upon salt formation with acids or alkyl halides. J.C. Salamone et al., Polymer Letters, 9, 13 (1971); I. Mielke et al., Macromol. Chem. 153, 307 (1972); J.C. Salamone et al, Macromolecules, 6, 475 (1973); J.C. Salamone et al., Polymer Letters, 15, 487 (1977). Such spontaneous polymerizations are relatively disadvantageous because they give rise to a mixture of the normal linear polyvinylpyridines and ionene type polymers.

US-A-3 948 960 discloses a method of forming a polymer material having a number average molecular weight of 500-10,000 by forming polymerisation systems containing aqueous hydrogen peroxide and a mutual solvent and effecting heating.

US-A-3 673 168 discloses a method of forming a polymer material having terminal hydroxyl groups and a number average molecular weight of 500-10,000 by forming a polymerisation system and heating.

In light of this background, there are needs for methods for polymerizing vinylpyridine monomers so as to achieve the production of linear polyvinylpyridines of controlled molecular weight which can then be converted into functionalized derivatives. Such methods would also desirably be facile to conduct using readily available and inexpensive equipment and starting materials, while providing good reaction rates and product yields. The present invention addresses these needs.

### SUMMARY OF THE INVENTION

One object of the invention is to provide a process for preparing functionalised derivatives of linear polyvinylpyridine polymers which provides the ability to control the molecular weight of the polymer product.

Another object of the invention is to provide a process for preparing functionalised derivatives of linear polyvinylpyridine polymers which provides molecular weight control without the need for utilizing extreme reaction conditions or large amounts of expensive catalysts.

Another object of the invention is to provide a process for preparing functionalised derivatives of linear polyvinylpyridine polymers which provides high reaction rates to form the product polymers.

Another object of the invention is to provide processes for preparing functionalised derivatives of linear polyvinylpyridine polymers which yield consistent results over a series of runs with respect to rates of reaction and product characteristics.

According to the present invention there is provided a process for producing a functionalised derivative of a linear polyvinylpyridine, comprising:
(a) forming a reaction mass by charging to a reactor an aqueous solvent including at least one organic co-solvent and water in a volumetric ratio of 1:99 to 95:5, one or more vinylpyridine monomer(s), and hydrogen peroxide;
(b) reacting the reaction mass to polymerize the vinylpyridine monomer(s) to form a linear polyvinylpyridine having a molecular weight of up to 100,000;
(c) distilling the reacted mass from step (b) containing the linear polyvinylpyridine to remove the organic co-solvent; and
(d) derivatising the distilled mass from step (c) to prepare a functionalized linear polyvinylpyridine selected from a quaternary salt form, or an N-oxide form.

In such processes the molecular weight of the product linear polyvinylpyridine can be regulated by selection of appropriate ratios of vinylpyridine monomer to hydrogen peroxide and/or by selection of appropriate reactant concentrations in the reaction mass. Generally speaking, with all else being equal, increasing hydrogen peroxide to vinylpyridine monomer ratios, and increasing monomer concentrations in the reaction mass, will yield decreasing molecular weights linear polyvinylpyridines. In the present aspect of the invention these parameters can be controlled to provide a linear polyvinylpyridine having a molecular weight in the desired range.

In one preferred mode of operating this process of the invention, the solvent includes alcohol as organic co-solvent and water. As indicated, this process allows relatively precise control of the molecular weight of the product polymer, with higher amounts of hydrogen peroxide used in a given reaction system providing lower molecular weight polymers, and lower amounts of the hydrogen peroxide initiator providing higher molecular weight polymers. The alcohol/water or other aqueous solvent preferably maintains both the vinylpyridine monomer(s) and the product polymers in solution. Additionally, it is believed that the hydrogen peroxide acts as both initiator and as terminator either with or without the alcohol, leading to the control of product molecular weight. Moreover, because the initiator/terminator, hydrogen peroxide, is relatively inexpensive, control of the reactions to obtain low molecular weight linear polyvinylpyridines is achieved without incurring great expense, as may be the case with other, commonly used initiators. Further, processes of the invention provide unexpectedly high reaction rates, for instance being far superior to those obtained when using alcohol alone as the solvent.

A preferred embodiment of the invention provides a polymerization process for preparing a functionalised derivative of a linear polyvinylpyridine in which measures are taken which improve the consistency in the reactivity of the system. In particular, in this embodiment the reaction mass is formed by the steps of:
charging to the reactor the aqueous solvent and said one or more vinylpyridine monomer(s) to provide a monomer-solvent mixture;
feeding an inert gas (e.g. nitrogen) subsurface in said monomer-solvent mixture; and
after said feeding, charging hydrogen peroxide to said reactor to form the reaction mass.

A further preferred embodiment of the invention provides a method of manufacturing a functionalised derivative of a linear polyvinylpyridine with consistency from batch to batch. In this embodiment, the method comprises conducting a series of preparative processes in a reaction vessel to form a linear polyvinylpyridine; and, periodically in between preparative processes in the series, treating the interior surface of the reaction vessel with an acid to maintain the reactivity of its interior surface.

Additional objects, features and advantages of the invention will be apparent from the following description.

### DESCRIPTION OF THE PREFERRED EMBODIMENT

For the purposes of promoting an understanding of the principles of the invention, reference will now be made to certain of its embodiments and specific language will be used to describe the same. It will nevertheless be understood that no limitation of the scope of the invention is thereby intended, such alterations, further modifications and applications of the principles of the invention as described herein being contemplated as would normally occur to one skilled in the art to which the invention relates.

As indicated above the present invention provides a unique process for preparing functionalised derivatives of linear polyvinylpyridines while controlling their molecular weight (M_{w}). The process involves reacting one or more vinylpyridine monomers in an aqueous solvent, preferably including water and an organic co-solvent, such as an alcohol, which increases the solubility of the monomer in the reaction system. The reaction is conducted in the presence of a catalytic amount of hydrogen peroxide, so as to polymerize the monomer or monomers to form a linear polyvinylpyridine polymer which can then be derivatised to prepare the quaternary salt form or N-oxide form.

Preferred vinylpyridine monomers for use in the invention are 2- and 4-vinylpyridine monomers and mixtures thereof, although other vinylpyridine monomers, for example 3-vinylpyridine monomers, are suitable. The vinylpyridine monomer used in the invention can be obtained commercially or by techniques known to the art and literature, and can be non-substituted or substituted (i.e. on its pyridine ring) with one, two, three or four groups which do not detrimentally interfere with the polymerization reaction, especially lower alkyl groups such as C₁ to C₆ alkyls, i.e. methyl, ethyl, propyl, butyl, heptyl and hexyl substituents (see, e.g., Decout, J. L. et al., J. Prelim. Sci. Prelim. Chem. Ed., 18, 2391 (1980)). More preferred vinylpyridine monomers are non-substituted 2- and 4-vinylpyridine monomers, for example as can be obtained from Reilly Industries, Inc., of Indianapolis, Indiana, U.S.A. Although not necessary for the present invention, it is of course preferred that the vinylpyridine monomer(s) used be of high purity, for example 90% to 95% or more pure.

In general, preferred linear polyvinylpyridines produced in accordance with the invention will comprise repeating units of the formula: 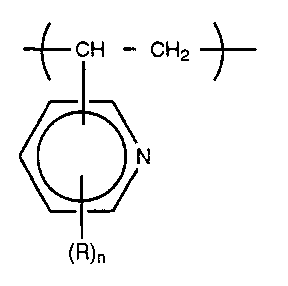 wherein n is 0 to 4 and R is a C₁ to C₆ alkyl group (in this definition, of course, each R may also differ from the other).

The amount of hydrogen peroxide initiator to use to obtain the desired product molecular weight will depend upon many factors including for example the particular reactants and solvent systems employed as well as their relative amounts (i.e. the concentration level of the reaction), and given the teachings herein will be readily determinable by the ordinarily skilled artisan. For example, as demonstrated in the Examples below, reactions run with equivalent amounts of hydrogen peroxide at higher concentrations (employing less of a given alcohol/water solvent relative to the vinylpyridine monomer(s)) will generally provide polymers of lower molecular weights, and vice versa.

In the process of the invention, these parameters will be controlled to provide linear polyvinylpyridines having polystyrene equivalent M_{w}'s up to 100,000, more preferably up to 50,000, and most preferably up to 30,000, for example in the range of 8,000 to 30,000. In these preferred processes, the molar ratio of hydrogen peroxide to vinylpyridine monomer employed will usually be 1:1 to 1:1000. More preferably, this ratio will be 1:1 to 1:100, and most preferably 1:1 to 1:50. Likewise, preferred processes are conducted at reaction concentration levels (i.e. (vinylpyridine monomer weight)/(vinylpyridine monomer weight + solvent weight)) of 5% to 50%. To prepare preferred linear polyvinylpridines with molecular weights in the 8,000-30,000 range, hydrogen peroxide/vinylpyridine monomer molar ratios of 1:5 to 1:50 will generally be used while reaction concentration levels of 10% to 50% are used. For instance, at these reaction concentration levels, hydrogen peroxide/monomer molar ratios of 1:5 to 1:20 will provide polymers with molecular weights in the range of 8,000 to 15,000.

The aqueous solvent system used can vary widely so long as the system provides an environment in which the polymerization proceeds to yield a linear polyvinylpyridine. Generally water plus at least one organic co-solvent will be used, wherein the organic co-solvent improves the solubility of the vinylpyridine monomer in the overall reaction mixture to facilitate polymerization. It has surprisingly been found that even very low amounts of a water-miscible co-solvent substantially improve the polymerizations as compared to corresponding polymerizations in water alone. For example, co-solvent:water volumetric ratios as low as 1:99 provide substantially improved processes as compared to the use of water alone as the solvent. Thus, generally, cosolvent:water volumetric ratios of 1:99 to 95:5 will typically be employed in the present invention, more preferably 1:99 to 60:40.

The polymerization reactions of the invention can be solution polymerizations (i.e. the solvent system maintains the vinypyridine monomer(s) and product polymers in solution) or heterogeneous (i.e. the vinypyridine monomer(s) and/or product polymers do not remain in solution). In one preferred aspect of the invention, cosolvent:water ratios will be selected to provide solvent systems which maintain the vinylpyridine monomer(s) and polymer product in solution. This ratio will be readily determined by those practiced in the area. In preferred such solution processes, the co-solvent:water ratio will be in the range of 25:75 to 95:5, more preferably 40:60 to 60:40.

Suitable co-solvents for use in the invention will be those which provide the necessary extent of solvation of the reactants and products and which do not interfere with the polymerization reaction. Suitable such solvents include, for example, alcohols such as water-miscible mono- or polyhydric aliphatic alcohols, generally having up to 15 carbon atoms, especially lower alcohols (i.e. C₁ to C₅ alcohols such as methanol, ethanol, propanol, butanol, and pentanol (these including both branched and unbranched forms, e.g. n-, i- or t- forms of these alcohols); ketones, for example those having from 2 to about 10 carbon atoms, e.g. dimethyl ketone, and methyl ethyl ketone; esters, for example having from 2 to 10 carbon atoms; amides, typically having from 1 to 10 carbon atoms, such as formamide; sulfoxides, e.g. having from 2 to 10 carbon atoms, for instance dialkylsulfoxides such as dimethylsulfoxide. A further organic co-solvent which may be used is a picoline. Generally, low-boiling solvents, for example boiling at temperatures of 120°C or below, are preferred since they are more readily removed from reaction products by vacuum distillation. Also, alcohols are preferred co-solvents, especially lower alcohols such as C₁ to C₄ alcohols, most preferably methanol, ethanol, n-propanol, i-propanol, n-butanol, t-butanol, and sec-butanol.

The polyvinylpyridines produced is then functionalized to the N-oxide form, and quaternary salt form. The formed free-base form linear polyvinylpyridine polymers can be converted to these functionalized forms by conventional techniques, as discussed further below.

Processes of the invention will be conducted at temperatures sufficient to achieve the desired polymerization of the vinylpyridine monomer. Generally, the temperature of the polymerizations will vary with many factors including the particular monomer or monomers employed. Typically, however, when using preferred low-boiling organic solvents in the solvent system, the polymerization will be conducted at the reflux temperature of the solvent system employed, for example at temperatures of at least 30°C, more preferably in the range of 30°C to 100°C.

Generally speaking, processes of the invention can be conducted at subatmospheric, atmospheric or superatmospheric pressures. Atmospheric pressures, as employed in the Examples, are conveniently employed and are preferred over pressurized reactions, at least for reasons of convenience and safety. If conducted at superatmospheric pressure, the processes desirably employ only moderate pressures, for example up to 1.3 mPa (200 psi).

The hydrogen peroxide, reactants and solvents can be combined in any suitable manner to achieve the polymerization. The hydrogen peroxide can be added to the solvent/monomer mixture, the monomer may be added to the solvent/hydrogen peroxide mixture, or the hydrogen peroxide and monomer can be concurrently added to the solvent, or all can be charged to a reaction vessel concurrently. It is preferred to charge the hydrogen peroxide last, and then heat the reaction mixture to the desired temperature for the polymerization to occur. In this regard, it has been discovered that feeding an inert gas such as nitrogen subsurface in the monomer/solvent mixture prior to the addition of hydrogen peroxide significantly improves the ensuing polymerization process, helping to maintain consistent reactivity in the system. In addition, in preferred processes, an inert gas such as nitrogen is used to blanket the vapor space above the liquid reaction mixture during the polymerization reaction.

It has also been discovered that process consistency from batch to batch can be improved by periodic treatment of the interior surfaces of the reaction vessel with an inorganic acid, such as sulfuric acid. The periodic acid treatment can be carried out after each batch if desired; however, it has been found that treatment after every several batches, for example after every 3 to 10 batches, suffices to provide good batch to batch consistency. In the applicants' preferred work to date, the reaction duration required to achieve a specified level of conversion has been monitored. When that duration begins to increase significantly, the acid treatment is applied.

The polymerization reaction will be continued for sufficient period of time to achieve substantial conversion of the vinylpyridine monomer(s) to the polymer product. The duration of the polymerization reaction required to achieve the conversion will depend upon several factors including the amount of hydrogen peroxide employed and the amounts and types of solvents and reactants employed. Typically, however, the polymerization reactions will be carried out over periods of up to 24 hours, more typically 1/2 to 10 hours. It has been discovered that prolonged heating during the polymerization process adversely affects the color of the final product, and thus shorter reaction times are preferred.

The polymer is preferably recovered in substantially pure form (i.e. substantially free from other components of the reaction medium such as unreacted monomer, co-solvent or catalyst residues). Polymer compositions having narrow molecular weight distributions are also favored. Preferred polymer compositions of the invention will have polydispersities (defined as the weight average molecular weight of the polymer divided by the number average molecular weight of the polymer, M_{w}/Mₙ) in the range of 1 to 10 and more preferably in the range of 1 to 3.

Preferred product polymers, especially those resulting from processes utilizing alcohol/water solvents, have also possessed excellent color characteristics. For instance, in the Examples below, the prepared polymers in 40 weight % solutions (e.g. in alcohol/water) have exhibited Gardner (Varnish) colors in the range of 5 to 15.

In a particularly preferred embodiment for producing the linear polyvinylpyridine, the organic co-solvent is an alcohol, preferably methanol, ethanol, propanol or butanol and the vinyl pyridine monomer is 2-vinylpyridine, 4-vinylpyridine or a mixture thereof. Most preferably the alcohol is methanol, and the aqueous solvent comprises methanol and water in a ratio of 60:40 to 40:60. Preferably also the ratio of hydrogen peroxide to vinylpyridine monomer is 1:1 to 1:10. The reaction is preferably conducted under reflux, e.g. for 2 to 10 hours. Subsequently the polyvinylpyridine may be recovered by distilling off the methanol, e.g. under vacuum.

The isolated linear polyvinylpyridines can be conventionally derivatized (functionalised) to produce the N-oxide form or quaternary salt form. In this regard, as used herein the term functionalized includes both partially and substantially fully functionalized polymers. In most cases, linear polyvinylpyridine polymers are desired in which at least 10%, more preferably at least 50% of the pendant pyridine groups, are functionalized. Quaternary salts can be prepared by reacting the linear polyvinylpyridines with halogenated organics such as alkyl halides, usually C₁ to C₁₀ alkyl halides. The linear polyvinylpyridines can be converted to their N-oxide forms by conventional procedures, for instance by reaction with hydrogen peroxide in the presence of acetic acid. See, e.g., the above-cited publication entitled "Linear Polyvinylpyridines: Properties and Applications" by Reilly Industries, Inc.

To promote a further understanding of the present invention and its features and advantages, the following specific examples are provided. Unless indicated otherwise, M_{w}'s set forth herein are polystyrene equivalent M_{w}'s.

### EXAMPLES 1-4

### Preparations of Linear Polyvinylpyridines

### General Procedure

Examples 1-4 set forth in Table 1 were conducted using the following procedure. To a 500 mL flask, equipped with a stirrer, thermometer, and reflux condenser, is charged 50 g (0.48 mole) 4-VP, 125 mL methanol, 125 mL water, and H₂O₂ (quantity depends on M_{w} desired). The solution is heated to reflux and held until conversion to polymer is >90% (typically 2-10 hours). The polymer can be isolated by removing the solvents under vacuum. As these Examples demonstrate, variation of the Mw of the final product is readily and effectively achieved by varying the ratio of H₂O₂ to vinylpyridine monomer. Additionally, excellent polydispersities (M_{w}/Mₙ) were obtained.

**TABLE 1**

| Example | Ex. 1 | Ex. 2 | Ex. 3 | Ex. 4 |
|---|---|---|---|---|
| 4-VP (moles) | 0.48 | 0.48 | 0.48 | 0.48 |
| H₂O₂ (moles) | 0.048 | 0.143 | 0.24 | 0.333 |
| H₂O₂:4-VP | 1:10 | 3:10 | 5:10 | 7:10 |
| Solvent | MeOH/H₂O | MeOH/H₂O | MeOH/H₂O | MeOH/H₂O |
| Solvent Amount (mL) | 125/125 | 125/125 | 125/125 | 125/125 |
| Temperature | reflux (82) | reflux (82) | reflux (82) | reflux (82) |
| Time (hrs) | 21 | 5 | 20 | 20 |
| Conversion (%) | | >70 | >75 | >70 |
| Mw Main Peak | 14170 | 8349 | 4081 | 2677 |
| Mw/Mn Main Peak | 2 | 2.3 | 1.8 | 1.75 |

### EXAMPLES 5-9

### Additional Polymerizations at High Concentrations

Using the same general procedure as that set forth for Examples 1-4 above, except using 50 mL of methanol and 50 mL of water (instead of 125 mL each), the Examples set forth in Table 2 were carried out. These Examples demonstrate the capacity to carry out processes of the invention at higher concentration levels (about 35% in these instances) while still effectively achieving variation of end product M_{w} and excellent polydispersities. Additionally, in general, these higher concentration runs provided products of lower M_{w} than lower concentration runs (Examples 1-4) employing the same H₂O₂/monomer ratios.

**TABLE 2**

| Example | Ex. 5 | Ex. 6 | Ex. 7 | Ex. 8 | Ex. 9 |
|---|---|---|---|---|---|
| H₂O₂:4-VP mole ratio | 1:10 | 2:10 | 3:10 | 4:10 | 5:100 |
| Conversion by NMR | 95% | 93% | 84% | 85% | 96% |
| Mw | 8857 | 5008 | 3630 | 2910 | 22900 |
| M_{w}/Mₙ | 2 | 1.8 | 1.7 | 1.6 | 2.5 |

### EXAMPLE 10

### Use of Ethanol/Water Solvent

To a reaction flask equipped with a reflux condenser, thermometer, and stirrer was charged 50 g (0.48 mole) 4-vinylpyridine, 6.37 g (0.096 mole at 51.28%) hydrogen peroxide, 125 mL water and 125 mL ethanol. The reaction was heated to reflux (88°C) and held for 5 1/2 hours. NMR indicated greater than 90% conversion to polymer. A sample of the reaction solution was analyzed by GPC and found to have Mw = 9500 and Mw/Mn = 2.26.

### EXAMPLE 11

### Use of i-Propanol/Water Solvent

To a reaction flask equipped with a reflux condenser, thermometer, and stirrer was charged 50 g (0.48 mole) 4-vinylpyridine, 6.37 g (0.096 mole at 51.28%) hydrogen peroxide, 125 mL water and 125 mL i-propanol. The reaction was heated to reflux (85°C) and held for 20 hours. NMR indicated greater than 90% conversion to polymer. A sample of the reaction solution was analyzed by GPC and found to have Mw = 8000 and Mw/Mn = 2.1.

### EXAMPLE 12

### Use of t-Butanol solvent

To a reaction flask equipped with a reflux condenser, thermometer, and stirrer was charged 28 g (0.27 mole) 4-vinylpyridine, 3.57 g (0.0315 mole at 30%) hydrogen peroxide, 70 mL water and 70 mL t-butanol. The reaction was heated to reflux (83°C) and held for 20 hours. NMR indicated greater than 90% conversion to polymer. A sample of the reaction solution was analyzed by GPC and found to have Mw = 9570 and Mw/Mn = 2.3.

### EXAMPLE 13

### Polymerization of 2-Vinylpyridine

To a reaction flask equipped with a reflux condenser, thermometer, and stirrer was charged 50 g (0.48 mole) 2-vinylpyridine, 6.37 g (0.096 mole at 51.28%) hydrogen peroxide, 125 mL water and 125 mL methanol. The reaction was heated to reflux (82°C) and held for 8 hours. NMR indicated approximately 75% conversion to polymer. A sample of the reaction solution was analyzed by GPC and found to have Mw = 6800 and Mw/Mn = 2.3.

### EXAMPLE 14

### Copolymerization of 2- and 4-Vinylpyridine

To a reaction flask equipped with a reflux condenser, thermometer, and stirrer was charged 50 g (25 g, 4-vinylpyridine and 25 g 2-VP, 0.48 mole) vinylpyridine, 6.37 g (0.096 mole at 51.28%) hydrogen peroxide, 125 mL water and 125 mL methanol. The reaction was heated to reflux (82°C) and held for 24 hours. NMR indicated approximately 75% conversion to polymer. A sample of the reaction solution was analyzed by GPC and found to have Mw = 5000 and Mw/Mn = 1.88.

### EXAMPLE 15

### Polymerization of 4-Vinylpyridine

To a reaction flask equipped with a reflux condenser, thermometer, and stirrer was charged 50 g (0.48 mole) 4-vinylpyridine, 0.64 g (0.0096 mole at 51.28%) hydrogen peroxide, 125 mL water and 125 mL methanol. The reaction was heated to reflux (82°C) and held for 5 hours. NMR indicated approximately 80% conversion to polymer. A sample of the reaction solution was analyzed by GPC and found to have Mw = 30200 and Mw/Mn = 1.9.

### EXAMPLES 16-18, 22-26 and Comparative Examples 19-21

### Preparations of Functionalized Linear Polyvinylpyridines

The functionalized linear polyvinylpyridines set forth in Table 3 can be prepared by reacting the free base form polyvinylpyridines of the indicated prior Examples with the indicated reagents.

**TABLE 3**

| Example | Polymer | Agent | Functional Form |
|---|---|---|---|
| 16 | Ex. 1 | Acetic Acid/H₂O₂ | N-oxide |
| 17 | Ex. 13 | Acetic Acid/H₂O₂ | N-oxide |
| 18 | Ex. 14 | Acetic Acid/H₂O₂ | N-oxide |
| 19* | Ex. 1 | HCl | HCl:Acid Salt |
| 20* | Ex. 13 | HCl | HCl:Acid Salt |
| 21* | Ex. 14 | H₂SO₄ | H₂SO₄:Acid |
| | | | Salt |
| 22 | Ex. 1 | Methyl Iodide | Quaternary |
| | | | Salt |
| 23 | Ex. 13 | Methyl Iodide | Quaternary |
| | | | Salt |
| 24 | Ex. 14 | Methyl Iodide | Quaternary |
| | | | Salt |
| 25 | Ex. 1 | Ethyl Iodide | Quaternary |
| | | | Salt |
| 26 | Ex. 13 | Ethyl Iodide | Quaternary |
| | | | Salt |

| | | | |
|---|---|---|---|
| * Comparative | | | |

### EXAMPLE 27

### Use of 1% Picoline Solvent

A round bottom flask was treated with with 10% aqueous sulfuric acid at room temperature, rinsed with water and allowed to thoroughly drain. 4-vinylpyridine, 150 grams (1.43 mole), 2.08 grams of 4-picoline and 206.4 grams of water were combined in the flask equipped with a reflux condenser, nitrogen sparger tube, stirrer and heating mantle. After the mixture was spared with a low stream of nitrogen at room temperature for about one hour with stirring, the sparger tube was raised to deliver nitrogen above the liquid level, 18.03 grams (0.186 mole) of 35% equeous hydrogen peroxide were added to the stirred mixture and heating begun with continued nitrogen flow. After about 30 minutes, reflux began and was continued for approximately 3 1/2 hours to give a linear poly-4-vinylpyridine having a M_{w} of 9,427 and a M_{w}/Mₙ of 2.22. The conversion of 4-vinylpyridine to polymer was 94.8%.

### EXAMPLE 28

### Use of 1% Methanol Solvent

To a round bottom flask treated and equipped as in Example 27 was added 150 grams (1.43 mole) of 4-vinylpyridine, 2.08 grams of methanol and 206.37 grams of water. After sparging with nitrogen for about an hour to sparger tube was raised to deliver nitrogen above the liquid level, and 18.05 grams (0.186 mole) of 35% aqueous hydrogen peroxide were added to the stirred mixture and heating begun with continued nitrogen flow. After about 30 minutes, reflux commenced and was continued for about 3 1/2 hours, forming a heterogeneous reaction mass in which the polymer did not remain in solution. The product linear poly-4-vinylpyridine had a M_{w} of 8,230 and a M_{w}/Mₙ of 2.12. The conversion of 4-vinylpyridine to polymer was 96.0%.

### EXAMPLE 29

### Use of Dimethylformamide Solvent

4-Vinylpyridine, 150 grams (1.43 mole), 114 mL of water and 114 mL of N,N-dimethylformamide were combined in a round bottom flask fitted with a stirrer, reflux condenser, a nitrogen sparger tube and heating mantle. The sparger tube was lowered so that its tip was below the liquid level in the flask and the mixture was sparged with a slow stream of nitrogen for about one hour with stirring. The sparger tube was raised above the liquid level and nitrogen flow continued providing a nitrogen blanket over the reaction mixture while 14.7 grams of 35% aqueous hydrogen peroxide (0.15 mole) was added to the reaction mixture and heating was commenced. After approximately 30 minutes reflux began and was continued for about 3 1/2 hours, forming a heterogeneous reaction mass in which the polymer did not remain in solution. The product linear poly-4-vinylpyridine had a M_{w} of 8903 and a M_{w}/Mₙ of 1.97. The conversion of 4-vinylpyridine to polymer was 97.5%.

### EXAMPLE 30

### Use of methyl ethyl ketone solvent

4-vinylpyridine, 150 grams (1.43 mole), 114 mL of water and 114 mL of methyl ethyl ketone were combined in a round bottom flask fitted with a stirrer, reflux condenser, a nitrogen sparger tube and heating mantle. The reaction mixture was stirred at room temperature and sparged with a slow stream of nitrogen below the liquid level for about one hour and 14.7 grams of 35% aqueous hydrogen peroxide (0.15 mole) was added. The sparger tube was raised above the liquid level to deliver nitrogen above the reaction mixture and heating was commenced. After approximately 30 minutes reflux began and was continued for about 6 3/4 hours to give a linear poly-4-vinylpyridine having a M_{w} of 8560 and a M_{w}/Mₙ of 1.81. The conversion of 4-vinylpyridine to polymer was 96.7%.

### EXAMPLE 31

### Use of DMSO solvent

4-Vinylpyridine, 150 grams (1.43 mole), 114 mL of water and 114 mL of dimethyl sulfoxide were combined in a round bottom flask fitted with a stirrer, reflux condenser, a nitrogen sparger tube and heating mantle. The reaction mixture was nitrogen sparged subsurface with stirring for about one hour. 14.7 grams of 35% aqueous hydrogen peroxide (0.15 mole) was added to the reaction mixture which was then heated to reflux with continued stirring under a nitrogen blanket. Reflux was continued for 1 hour to give a linear poly-4-vinylpyridine having a M_{w} of 9483 and a M_{w}/Mₙ of 1.88. The conversion of 4-vinylpyridine to polymer was 98.0%.

## Claims

1. A process for producing a functionalised derivative of a linear polyvinylpyridine, comprising:
(a) forming a reaction mass by charging to a reactor an aqueous solvent including at least one organic co-solvent and water in a volumetric ratio of 1:99 to 95:5, one or more vinylpyridine monomer(s), and hydrogen peroxide;
(b) reacting the reaction mass to polymerize the vinylpyridine monomer(s) to form a linear polyvinylpyridine having a molecular weight of up to 100,000;
(c) distilling the reacted mass from step (b) containing the linear polyvinylpyridine to remove the organic co-solvent; and
(d) derivatising the distilled mass from step (c) to prepare a functionalized linear polyvinylpyridine selected from a quaternary salt form, or an N-oxide form.

2. The process of claim 1 wherein the linear polyvinylpyridine has a polydispersity of 1 to 3.

3. The process of claim 1 or 2, wherein said functionalized linear polyvinylpyridine is an N-oxide functionalized linear polyvinylpyridine.

4. The process of claim 1 or 2, wherein said functionalized linear polyvinylpyridine is a quaternary salt functionalized linear polyvinylpyridine.

5. The process as claimed in any one of claims 1 to 4 wherein the reaction mass is formed by the steps of:
charging to the reactor the aqueous solvent and said one or more vinylpyridine monomer(s) to provide a monomer-solvent mixture;
feeding an inert gas subsurface in said monomer-solvent mixture; and
after said feeding, charging hydrogen peroxide to said reactor to form the reaction mass.

6. The polymerization process of claim 5 wherein the inert gas is nitrogen.

7. The process as claimed in any one of claims 1 to 6 wherein:
a series of preparative processes are conducted in the reaction vessel to form a linear polyvinylpyridine; and
periodically in between preparative processes in said series, the interior surface of said reaction vessel is treated with an acid to maintain the reactivity of said interior surface.

8. The process as claimed in any one of claims 1 to 7 wherein the vinyl pyridine monomer is 2-vinyl pyridine.

9. The process as claimed in any one of claims 1 to 7 wherein the vinyl pyridine monomer is 4-vinyl pyridine.

10. The process as claimed in any one of claims 1 to 7 wherein the vinyl pyridine monomer is a mixture of 2-vinyl pyridine and 4-vinyl pyridine.

11. The process of any one of claims 1 to 10 wherein the aqueous solvent comprises water and an organic co-solvent selected from the group consisting of alcohols, esters, ketones, picolines, amides and sulfoxides.

12. The process of claim 11 wherein the co-solvent and water are included in a ratio of 60:40 to 40:60.

13. The process of claim 12 wherein the co-solvent is an alcohol.

14. The process of claim 13 wherein the alcohol is selected from methanol, ethanol, propanol or butanol.

15. The process of claim 13 wherein the vinylpyridine monomer is 2-vinylpyridine, 4-vinylpyridine, or a mixture thereof.

16. The process of claim 15 wherein the alcohol is methanol.

17. The process of claim 16 wherein the methanol and water are included in a ratio of 60:40 to 40:60.

18. The process of claim 17 wherein the reacting occurs under refluxing conditions.

19. The process of claim 18 wherein the reacting is conducted for 2 to 10 hours.

20. The process of claim 19 wherein the reacting occurs at atmospheric pressure.

21. The process of claim 20 wherein the linear polyvinylpyridine has a polydispersity of 1 to 3.

22. The process of claim 21 wherein said distilling is under vacuum.

23. The process of claim 22 wherein the ratio of hydrogen peroxide to vinylpyridine monomer is 1:1 to 1:10.

24. The process of anyone of claims 1 - 23 wherein step (b) is conducted at a temperature of 30°C to 100°C.

25. The process of anyone of claims 1 - 24 wherein the aquaous solvent maintains the vinylpyridine monomer(s) and product polymers in solution.

## Patentansprüche

1. Verfahren zur Herstellung eines funktionalisierten Derivats eines linearen Polyvinylpyridins, umfassend:
(a) Erzeugen einer Reaktionsmasse, indem ein wässeriges Lösungsmittel, einschließend mindestens ein organisches Hilfslösungsmittel und Wasser in einem Volumenverhältnis von 1:99 bis 95:5, eines oder mehrere Vinylpyridinmonomer(e) und Wasserstoffperoxid in einen Reaktor eingefüllt werden;
(b) Umsetzen der Reaktionsmasse, um das (die) Vinylpyridinmonomer(e) zu polymerisieren, wobei ein lineares Polyvinylpyridin mit einem Molekulargewicht bis zu 100000 erzeugt wird;
(c) Destillieren der das lineare Polyvinylpyridin enthaltenden umgesetzten Masse aus Schritt (b), um das organische Hilfslösungsmittel zu entfernen; und
(d) Derivatisieren der destillierten Masse aus Schritt (c), um ein funktionalisiertes lineares Polyvinylpyridin, ausgewählt aus einer quaternären Salzform oder einer N-Oxid-Form, herzustellen.

2. Verfahren nach Anspruch 1, wobei das lineare Polyvinylpyridin eine Polydispersität von 1 bis 3 hat.

3. Verfahren nach Anspruch 1 oder 2, wobei das funktionalisierte lineare Polyvinylpyridin ein als N-Oxid funktionalisiertes lineares Polyvinylpyridin ist.

4. Verfahren nach Anspruch 1 oder 2, wobei das funktionalisierte lineare Polyvinylpyridin ein als quaternäres Salz funktionalisiertes lineares Polyvinylpyridin ist.

5. Verfahren nach einem der Ansprüche 1 bis 4, wobei die Reaktionsmasse durch die Schritte:
Einfüllen des wässerigen Lösungsmittels und des einen oder mehrerer Vinylpyridinmonomers(e) in den Reaktor, um ein Monomer-Lösungsmittel-Gemisch bereitzustellen;
Zuführen eines inerten Gases unter der Oberfläche in dem Monomer-Lösungsmittel-Gemisch; und
nach dem Zuführen Einfüllen von Wasserstoffperoxid in den Reaktor, um die Reaktionsmasse zu erzeugen,
erzeugt wird.

6. Polymerisationsverfahren nach Anspruch 5, wobei das inerte Gas Stickstoff ist.

7. Verfahren nach einem der Ansprüche 1 bis 6, wobei eine Serie von Herstellungsverfahren in dem Reaktionsbehälter durchgeführt wird, um ein lineares Polyvinylpyridin zu erzeugen; und
periodisch zwischen den Herstellungsverfahren in der Serie die innere Oberfläche des Reaktionsbehälters mit einer Säure behandelt wird, um die Reaktivität der inneren Oberfläche zu bewahren.

8. Verfahren nach einem der Ansprüche 1 bis 7, wobei das Vinylpyridinmonomer 2-Vinylpyridin ist.

9. Verfahren nach einem der Ansprüche 1 bis 7, wobei das Vinylpyridinmonomer 4-Vinylpyridin ist.

10. Verfahren nach einem der Ansprüche 1 bis 7, wobei das Vinylpyridinmonomer ein Gemisch von 2-Vinylpyridin und 4-Vinylpyridin ist.

11. Verfahren nach einem der Ansprüche 1 bis 10, wobei das wässerige Lösungsmittel Wasser und ein organisches Hilfslösungsmittel, ausgewählt aus der Gruppe, bestehend aus Alkoholen, Estern, Ketonen, Picolinen, Amiden und Sulfoxiden, umfaßt.

12. Verfahren nach Anspruch 11, wobei das Hilfslösungsmittel und Wasser in einem Verhältnis von 60:40 bis 40:60 eingeschlossen sind.

13. Verfahren nach Anspruch 12, wobei das Hilfslösungsmittel ein Alkohol ist.

14. Verfahren nach Anspruch 13, wobei der Alkohol aus Methanol, Ethanol, Propanol oder Butanol ausgewählt ist.

15. Verfahren nach Anspruch 13, wobei das Vinylpyridinmonomer 2-Vinylpyridin, 4-Vinylpyridin oder ein Gemisch davon ist.

16. Verfahren nach Anspruch 15, wobei der Alkohol Methanol ist.

17. Verfahren nach Anspruch 16, wobei das Methanol und Wasser in einem Verhältnis von 60:40 bis 40:60 eingeschlossen sind.

18. Verfahren nach Anspruch 17, wobei die Umsetzung unter Rückflußbedingungen erfolgt.

19. Verfahren nach Anspruch 18, wobei die Umsetzung für 2 bis 10 Stunden durchgeführt wird.

20. Verfahren nach Anspruch 19, wobei die Umsetzung bei Atmosphärendruck erfolgt.

21. Verfahren nach Anspruch 20, wobei das lineare Polyvinylpyridin eine Polydispersität von 1 bis 3 hat.

22. Verfahren nach Anspruch 21, wobei das Destillieren unter Vakuum geschieht.

23. Verfahren nach Anspruch 22, wobei das Verhältnis von Wasserstoffperoxid zu Vinylpyridinmonomer 1:1 bis 1:10 ist.

24. Verfahren nach einem der Ansprüche 1-23, wobei Schritt (b) bei einer Temperatur von 30°C bis 100°C durchgeführt wird.

25. Verfahren nach einem der Ansprüche 1-24, wobei das wässerige Lösungsmittel das (die) Vinylpyridinmonomer(e) und Produktpolymere in Lösung hält.

## Revendications

1. Procédé pour la production d'un dérivé fonctionnalisé d'une polyvinylpyridine linéaire, comprenant:
(a) la formation d'une masse réactionnelle en chargeant dans un réacteur un solvant aqueux incluant au moins un co-solvant organique et de l'eau en un rapport volumétrique de 1:99 à 95:5, un ou plusieurs monomères de vinylpyridine et du peroxyde d'hydrogène;
(b) la mise en réaction de la masse réactionnelle pour polymériser le ou les monomères de vinylpyridine pour former une polyvinylpyridine linéaire possédant un poids moléculaire allant jusqu'à 100.000;
(c) la distillation de la masse ayant réagi provenant de l'étape (b) contenant la polyvinylpyridine linéaire pour retirer le co-solvant organique; et
(d) la dérivation de la masse distillée provenant de l'étape (c) pour préparer une polyvinylpyridine linéaire fonctionnalisée choisie parmi une forme de sel quaternaire ou une forme de N-oxyde.

2. Procédé suivant la revendication 1, dans lequel la polyvinylpyridine linéaire présente une polydispersité de 1 à 3.

3. Procédé suivant la revendication 1 ou 2, dans lequel ladite polyvinylpyridine linéaire fonctionnalisée est une polyvinylpyridine linéaire fonctionnalisée de N-oxyde.

4. Procédé suivant la revendication 1 ou 2, dans lequel ladite polyvinylpyridine linéaire fonctionnalisée est une polyvinylpyridine linéaire fonctionnalisée de sel quaternaire.

5. Procédé suivant l'une quelconque des revendications 1 à 4, dans lequel la masse réactionnelle est formée par les étapes:
de chargement dans le réacteur du solvant aqueux et desdits un ou plusieurs monomères de vinylpyridine pour donner un mélange de monomère-solvant;
d'alimentation d'une sous-surface de gaz inerte dans ledit mélange de monomère-solvant; et
après ladite alimentation, de chargement de peroxyde d'hydrogène dans ledit réacteur pour former la masse réactionnelle.

6. Procédé de polymérisation suivant la revendication 5, dans lequel le gaz inerte est de l'azote.

7. Procédé suivant l'une quelconque des revendications 1 à 6, dans lequel:
une série de procédés de préparation est menée dans le réacteur pour former une polyvinylpyridine linéaire; et
périodiquement entre les procédés de préparation dans ladite série, la surface intérieure dudit réacteur est traitée avec un acide pour maintenir la réactivité de ladite surface intérieure.

8. Procédé suivant l'une quelconque des revendications 1 à 7, dans lequel le monomère de vinylpyridine est la 2-vinylpyridine.

9. Procédé suivant l'une quelconque des revendications 1 à 7, dans lequel le monomère de vinylpyridine est la 4-vinylpyridine.

10. Procédé suivant l'une quelconque des revendications 1 à 7, dans lequel le monomère de vinylpyridine est un mélange de 2-vinylpyridine et de 4-vinylpyridine.

11. Procédé suivant l'une quelconque des revendications 1 à 10, dans lequel le solvant aqueux comprend de l'eau et un co-solvant organique choisi dans le groupe constitué d'alcools, d'esters, de cétones, de picolines, d'amides et de sulfoxydes.

12. Procédé suivant la revendications 11, dans lequel le co-solvant et l'eau sont inclus en un rapport de 60:40 à 40:60.

13. Procédé suivant la revendications 12, dans lequel le co-solvant est un alcool.

14. Procédé suivant la revendications 13, dans lequel l'alcool est choisi parmi le méthanol, l'éthanol, le propanol ou le butanol.

15. Procédé suivant la revendications 13, dans lequel le monomère de vinylpyridine est la 2-vinylpyridine, la 4-vinylpyridine ou un mélange des deux.

16. Procédé suivant la revendications 15, dans lequel l'alcool est du méthanol.

17. Procédé suivant la revendications 16, dans lequel le méthanol et l'eau sont inclus en un rapport de 60:40 à 40:60.

18. Procédé suivant la revendications 17, dans lequel la réaction se produit sous des conditions de reflux.

19. Procédé suivant la revendications 18, dans lequel la réaction est menée pendant 2 à 10 heures.

20. Procédé suivant la revendications 19, dans lequel la réaction se produit à la pression atmosphérique.

21. Procédé suivant la revendications 20, dans lequel la polyvinylpyridine linéaire présente une polydispersité de 1 à 3.

22. Procédé suivant la revendications 21, dans lequel ladite distillation s'effectue sous vide.

23. Procédé suivant la revendications 22, dans lequel le rapport de peroxyde d'hydrogène sur le monomère de vinylpyridine est de 1:1 à 1:10.

24. Procédé suivant l'une quelconque des revendications 1-23, dans lequel l'étape (b) est menée à une température de 30°C à 100°C.

25. Procédé suivant l'une quelconque des revendications 1-24, dans lequel le solvant aqueux maintient le ou les monomères de vinylpyridine et les produits de polymères en solution.
